# EUROPEAN PATENT SPECIFICATION

(11) **EP 4 089 375 B1**
(45) Date of publication and mention of the grant of the patent: **03.07.2024**
(21) Application number: 21173877.8
(22) Date of filing: 14.05.2021
(51) Int. Cl.: G01F 15/18, G01F 15/14, G01F 1/66, G01F 3/22

(54) **MONOPIPE ADAPTER FOR A GAS METER**
EINROHRADAPTER FÜR EINEN GASZÄHLER
ADAPTATEUR MONOTUBE POUR UN COMPTEUR DE GAZ

(43) Date of publication of application: 16.11.2022
(73) Proprietor: Itron Global SARL, Liberty Lake, WA 99019 (US)
(72) Inventor: KIRSTEN, Tobias, Eggenstein-Leopoldsh (DE); HAAG, Christian Oskar, Philippsburg (DE)
(74) Representative: Morrall, Jonathan Ian McLachlan

(56) References cited:
- CN-A- 101 126 652
- CN-A- 102 967 335
- CN-U- 212 871 327
- DE-A1-102010 055 116
- GB-A- 810 887
- US-A1- 2016 370 215
- US-A1- 2017 241 822
- US-A1- 2018 306 625
- US-A1- 2020 149 944
- US-B2- 9 032 790

## Description

### BACKGROUND

A large number of mechanical gas meters are in use by utility companies supplying natural gas to customers for heating, cooking, etc. Some have a movable diaphragm (sometimes called a "bellows") technology. Others have rotary technologies. Such mechanical meters are slowly being replaced by increasing numbers of static gas meters, i.e., meters that do not have moving parts. In an example, a static meter may use ultrasonic technologies. In an example of ultrasonic technologies, transducers may send sound waves in directions that are with the gas flow and against the gas flow. A difference in the time of flight of such signals is used to determine a gas flow rate and gas usage.

The cost of replacing mechanical meters is considerable. Not only is there the cost of the new static meter, but there is the cost and environmental impact of disposing of the older mechanical meter.

US 9 032 790 B2 describes a gas meter comprising a meter housing with a gas inlet with associated connecting piece for a gas supply line and a gas outlet with associated connecting piece for a gas discharge line, wherein the meter housing is a bellows gas meter housing in which a measuring device comprising a housing with an integrated micro-thermal flow measuring sensor is arranged on the gas outlet, which housing is connected in a gas-tight manner to the connecting piece on the outlet side or to the meter housing in the area of the gas outlet.

CN 102 967 335 A describes a micro-thermal type fuel gas meter comprising a housing and an allocation cavity, a gas filter, a gas inlet, a main passage, a measuring passage, and an outflow passage through which fuel gas flows. The allocation cavity is connected to the inlet of a gas inlet/outlet nozzle on the housing, the outflow passage is connected to the outlet of the gas inlet/outlet nozzle; the main passage is formed by a plurality of parallel branch passages; the measuring passage and the main passage are arranged in parallel; and a CMOS (Complementary Metal-Oxide-Semiconductor Transistor) semi-conductor sensor consisting of a CMOS semi-conductor chip, and a heating unit and two temperature sensors which are arranged in a thin layer of the chip, is arranged in the measuring passage, wherein the heating unit is arranged between the two temperature sensors.

DE 10 2010 055116 A1 describes a meter having a drip-tray type flow guide element whose sealing element i.e. sealing ring, is sealably arranged in a housing to separate an intake volume region and an outlet volume region. The sealing element comprises a housing wall in a contact area at a gas inlet and a gas outlet such that the inlet volume region or outlet region extends along a partial section of the wall, so that the gas inlet or outlet is eccentrically arranged in center of the wall. The gas inlet and outlet are in communication with the inlet and outlet volume regions, respectively.

GB 810 887 A describes a gas meter having inlet and outlet apertures on the same wall of the casing and co-axial passages connected to a co-axial inlet and outlet connector, the connector having a loose part which can be positively connected, as by soldering, to the inner passage before a channel member is soldered to the casing to form the outer co-axial passage and the loose part is joined to the connector by tightening a union nut.

CN 212 871 327 U describes a gas outlet pipe structure of a single-pipe gas meter comprising a machine core, a gas outlet pipe and a gas meter connector and is characterized in that a gas outlet of the machine core is connected with one end of the gas outlet pipe, the other end of the gas outlet pipe is connected with one end of an adapter pipe, the other end of the adapter pipe is connected with the gas meter connector, and a center hole connected with the adapter pipe is formed in the center of the gas meter connector. A groove is formed in the surface of the gas meter connector on the outer side of the center hole, one end of a buckling position is arranged in the groove, and the other end of the buckling position is located on the adapter pipe.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components. Moreover, the figures are intended to illustrate general concepts, and not to indicate required and/or necessary elements.
FIG. 1 is a prior art mechanical gas meter having a movable diaphragm.
FIG. 2A is a rendering providing a cut-away view of a gas meter having an example of a monopipe adapter.
FIG. 2B is a line drawing providing a cut-away view of a gas meter having an example of a monopipe adapter.
FIG. 3 is a line drawing of an example gas meter.
FIG. 4 is a rendering of a metrology assembly connected to a monopipe adapter.
FIG. 5A is a line drawing showing a side view of an example monopipe adapter.
FIG. 5B is a line drawing showing a cutaway side view of the example monopipe adapter.
FIG. 6A is a line drawing showing a view of a top portion of an example monopipe adapter.
FIG. 6B is a line drawing showing a view of a bottom portion of the example monopipe adapter.
FIGS. 7A, 7B and 7C collectively show a flowchart describing a method of converting a diaphragm gas meter into a static gas meter.
FIG. 8 is a flowchart describing a method of operating a static gas meter.

### DETAILED DESCRIPTION

### Overview

According to the present invention, a monopipe adapter for a static gas meter is provided as defined in claim 1.

In a first example, an upper portion of an enclosure of a diaphragm gas meter may be used, repurposed, and/or recycled as an upper portion of the enclosure of a static gas meter. The example is applicable to enclosures used in some, but not all, countries. In a conversion process usable in those countries, a lower portion of the enclosure of the diaphragm gas meter is separated from the upper portion of the enclosure of the diaphragm gas meter. The lower portion of the enclosure contains the diaphragm, and may be discarded in an appropriate manner. The upper portion of the enclosure may be of a type having a monopipe connector having a gas inlet and a gas outlet, and may be used as part of the enclosure of the static gas meter. Depending on the diaphragm gas meter, some components of the diaphragm gas meter may require removal and disposal from the upper portion of the enclosure. The components of the static gas meter may be assembled prior to installation in the upper portion of the enclosure. In the assembly, a downstream end of a static gas metrology assembly can be connected to an upstream end of a monopipe adapter. A downstream end of the monopipe adapter may be connected to the outlet of the monopipe connector of the upper portion of the enclosure. A cover or base-plate may be attached to a flange of the upper portion of the enclosure, thereby sealing the enclosure of the static gas meter in a gas-tight manner.

In a second example, a static gas meter is contained within an upper portion of the enclosure that was previously part of a diaphragm gas meter. The upper portion of the enclosure includes a monopipe connector having a concentric arrangement (i.e., a pipe-within-a-pipe) with an inlet and an outlet included in the same connector. A flange is disposed about a perimeter of a rim of the upper portion of the enclosure allowing attachment of a cover to the flange of the upper portion of the enclosure, to thereby define a sealed internal cavity forming the enclosure of the static gas meter. In the example, a monopipe adapter has an outlet connected to the outlet of the monopipe connector. An outlet of a static gas metrology assembly is connected to an inlet of the monopipe adapter. In operation, gas flows from an inlet of the monopipe connector into the cavity defined by the enclosure of the static gas meter, enters and flows through the static gas metrology assembly where it is measured, flows through the monopipe adapter, and exits the static gas meter at an outlet of the monopipe connector.

In a third example, a monopipe adapter is used in a static gas meter, and may include a tubular body having an upstream end and a downstream end. A downstream fastener connects the downstream end of the tubular body to a monopipe connector of the enclosure of the static gas meter. A deflector includes a semicircular sidewall to deflect a portion of a gas flow received through the monopipe connector from a monopipe. A rib defined on an interior of the semicircular sidewall divides an incoming gas flow into a first gas flow and a second gas flow which enter a cavity defined by the enclosure of the static gas meter. A static gas metrology assembly is connected to an upstream fastener of the tubular body of the monopipe adaptor. In operation, the monopipe adapter receives gas flow from the monopipe, and deflects the flow into an interior cavity of the static gas meter. Gas from the interior cavity of the static gas meter enters the static gas metrology assembly where the gas is measured. Gas leaving the static gas metrology assembly flows through the monopipe adapter, exits the static gas meter, and moves into the monopipe.

The innovations discussed herein save money by reusing part of the existing (and previously approved) enclosure of an older diaphragm-type gas meter. Additionally, such enclosure designs are known and accepted by corporations in the industry, and the connections, interfaces, and closing/sealing technologies are proven to work in the field (e.g., gas customer installation sites). Accordingly, the innovations provide new technology inside the enclosures, while using the proven technology of the existing enclosure components.

### Example System and Techniques

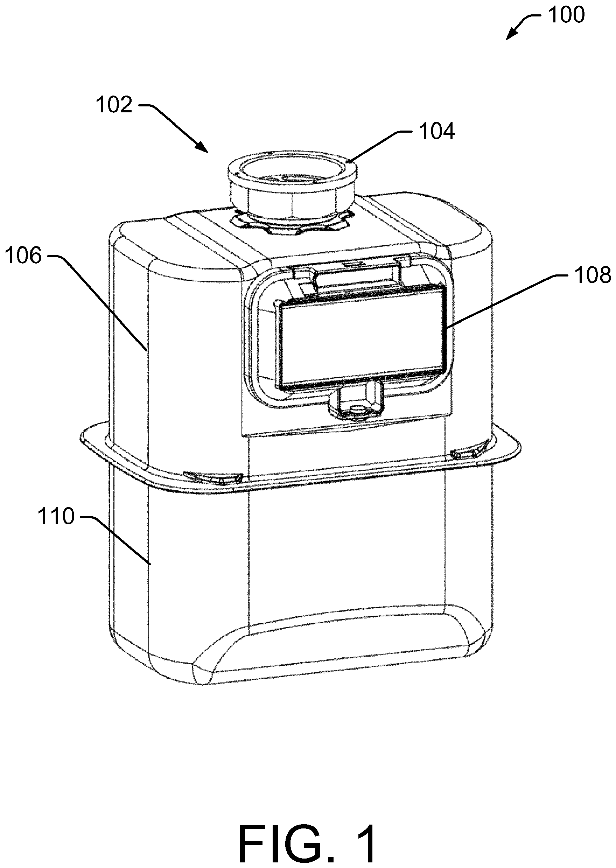

FIG. 1 is a prior art mechanical gas meter 100 having a mechanical technology involving a movable diaphragm to measure gas flow. The gas meter 100 is connected to a monopipe 102 using a monopipe connector 104. The monopipe (i.e., a pipe-within-a-pipe) conducts gas into, and out of, the meter 100. The monopipe connector 104 acts a fastener for both a gas inlet and a gas outlet. An upper portion 106 of the enclosure of the gas meter 100 may include electronics, a user interface 108, and/or other devices. A lower portion 110 of the gas meter may include a diaphragm configured to measure gas usage by a utility company customer.

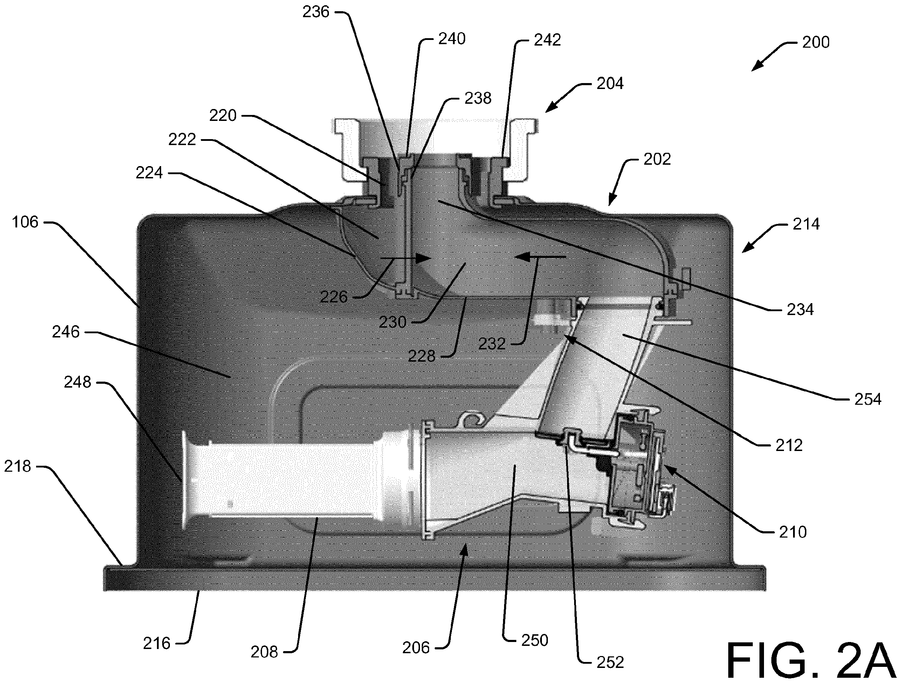

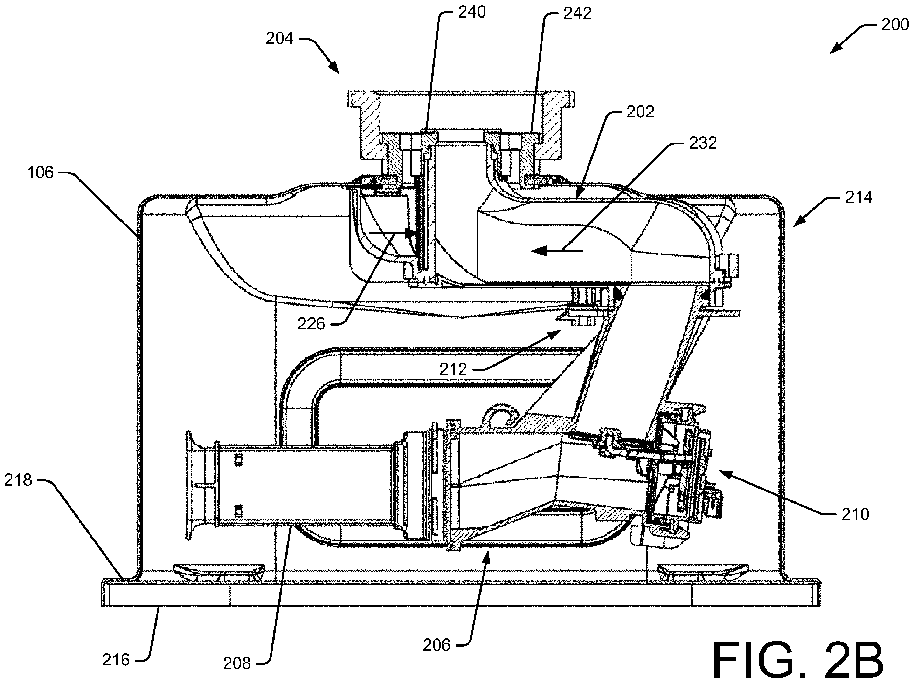

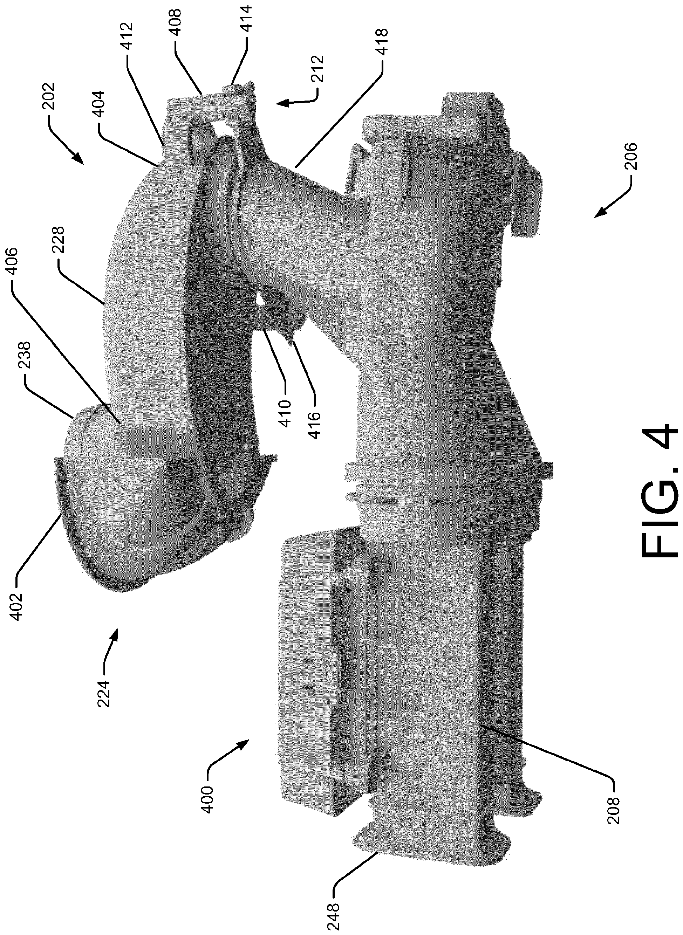

FIGS. 2A and 2B shows a gas meter 200 having an example of a monopipe adapter 202. The monopipe adapter 202 is attached to a monopipe connector 204 and to a metrology assembly 206. The metrology assembly 206 includes a metrology conduit 208, a valve assembly 210, and an upstream fastener assembly 212. The upstream fastener assembly 212 connects the metrology assembly to the monopipe adapter 202. The upstream fastener assembly is on the "upstream" end of the monopipe adapter 202, which receives gas from the metrology assembly 206. Gas moving through the metrology conduit 208 may be measured using a static gas measuring technology, which may be based on ultrasonic transducers. (The metrology device 400 of the metrology assembly 206 is seen in FIG. 4.) The valve assembly 210 can be used to turn a gas service to a customer on or off. In the example shown, the valve assembly 210 prevents the passage of gas leaving the metrology conduit 208 from reaching the monopipe adapter 202. The upstream fastener assembly 212 allows the metrology assembly 206 to be connected to the monopipe adapter 202.

The gas meter 200 has an enclosure 214 which includes the upper portion 106 (first seen in FIG. 1) taken from a diaphragm gas meter 100. The enclosure has a cover 216 or base plate, covering the bottom of the meter. In the example shown, the cover 216 is attached to a flange 218 defined about a lower perimeter of the upper portion 106.

The monopipe connector 204 is connected to a monopipe having a pipe-within-a-pipe construction. An outer pipe of the monopipe delivers gas to the gas meter 200, while an inner pipe of the monopipe removes gas from the gas meter. An outer pipe delivers gas to a passage 220, from which the gas passes into the gas meter 200. Initially, the gas enters the gas meter in a region 222 bounded in part by a deflector assembly 224. The deflector assembly 224 sends the gas to the right 226. Note that the gas in the flow to the right is outside the kidney-shaped hollow tubular body 228 of the monopipe adapter 202. Gas 230 within the kidney-shaped hollow tubular body 228 is moving to the left 232 toward the passage 234 through which it will exit the gas meter 200.

The monopipe connector 204 connects to inner and outer pipes of the monopipe (not shown). The inner pipe of the monopipe seats on an upper surface of annular inner rim 240, while the outer pipe of the monopipe seats on an upper surface of annular outer rim 242. An upper surface of the monopipe adapter 202 is seated in a leak-tight manner to an annular lower surface of the rim 240 of the inner pipe of the monopipe connector. In an example, a connecting surface 236 of the monopipe connector 204 makes a leak-tight seal with a connecting surface 238 of the monopipe adapter 202. The connecting surfaces 236, 238 may comprise two surfaces fastened together using sealant, or two surfaces friction-fit, optionally with an O-ring between them.

In operation, gas traveling between the outer pipe of the monopipe and the inner pipe of the monopipe enters the gas meter 200 at passage 220. The gas moves into region 222 and is redirected by the deflector assembly 224, causing it to move to the right 226 within the cavity of the enclosure 214. Gas moves within a cavity 246 defined by the enclosure 214 and enters an intake port 248 of a metrology conduit 208 or bypass device (if present). (In an example using a bypass device, the gas measured by the metrology assembly may be increased (e.g., doubled, or increased by a factor) to account for the gas traveling through the bypass device. The metrology device 400 is shown in FIG. 4.) Gas leaving the metrology conduit 208 passes through an upstream passage 250 of the metrology assembly 206, through the valve 252 of the valve assembly 210, and into a downstream passage 254 of the metrology assembly 206. Gas then moves to the left 232 within the monopipe adapter 202. Gas exits the gas meter 200 through passage 234 at the downstream end of the monopipe adapter 202, and enters the inner pipe of the monopipe (not shown).

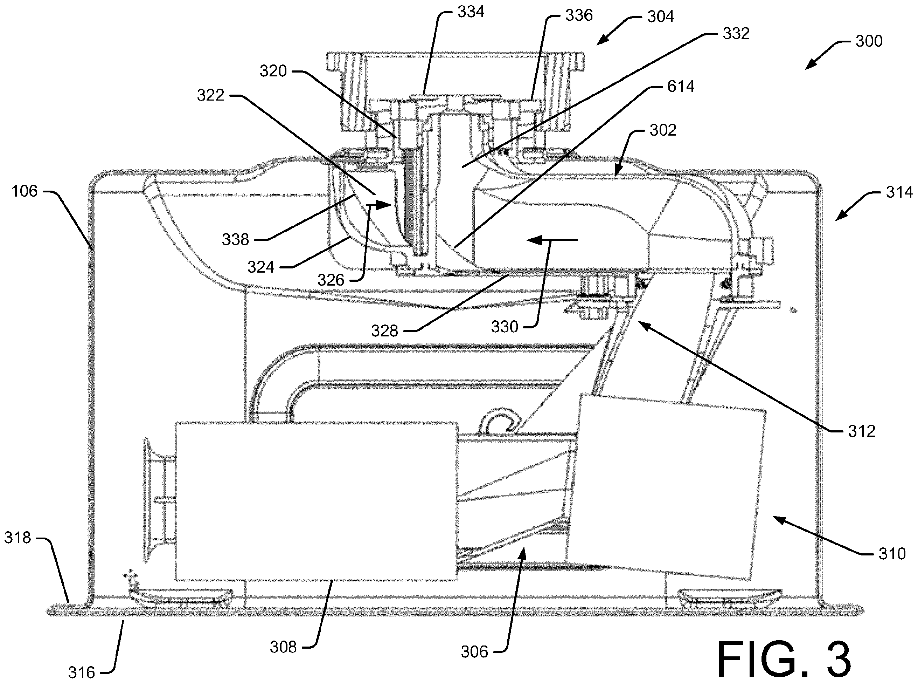

FIG. 3 shows a gas meter 300 having a monopipe adapter 302, monopipe connector 304, and metrology assembly 306. The metrology assembly 306 includes a metrology device 308 (shown as a box to represent a variety of metrology assemblies in a non-limiting manner), a valve assembly 310 (shown as a box to represent a variety of valves in a non-limiting manner), and a fastener assembly 312. The metrology device 308 of the metrology assembly 306 may use any technology (e.g., an ultrasonic technology) indicated by design requirements.

The valve assembly 310 can be used to enable or disable gas flow to the customer service site. The fastener assembly 312 allows the metrology assembly 306 to be connected to the monopipe adapter 302.

The gas meter 300 has an enclosure 314 which includes the upper portion 106 that may have been repurposed from a diaphragm gas meter. The enclosure has a cover 316 or base plate, covering the bottom of the meter. The cover 316 may be attached to a flange 318 of the upper portion 106.

The monopipe connector 304 is connected to a monopipe (not shown). An outer pipe delivers gas to a passage 320-within the monopipe connector 304— from which it flows into the gas meter 300. Initially, the gas enters the gas meter in a region 322 bounded by a deflector 324. The deflector 324 sends the gas to the right 326. Note that the gas is outside the tubular body 328 of the monopipe adapter 302. Gas 330 moving left within the tubular body 328 is moving toward the passage 332 through which it will exit the gas meter 300.

In an example, the deflector 324 includes a semicircular sidewall having a rib 338 defined on an interior surface of the semicircular sidewall that deflects gas to either side of the tubular body 328 in substantially equal volumes. In an example, the rib 338 is centrally located on the interior of the semicircular sidewall of the deflector to divide the incoming gas to flow on both sides of the tubular body 328.

The monopipe connector 304 has an inner rim 320 that fastens the inner pipe of the monopipe to the monopipe adapter 302. The monopipe connector 304 is also connected to the outer pipe of the monopipe (not shown). The inner pipe of the monopipe seats on rim 334, while the outer pipe of the monopipe seats on rim 336. The inner rim 320 and upwardly-facing rims 334, 336 are different surfaces of the monopipe connector 304.

FIG. 4 shows a monopipe adapter 202 connected to a metrology assembly 206 by an upstream fastener assembly 212. The monopipe adapter 202 provides an adaptive connection between the monopipe connector (e.g., the monopipe connector 204 of FIG. 2A) and the metrology assembly 206 having a metrology device 400 within an enclosure (e.g., enclosure 214 shown in FIG. 2A). The metrology device 400 of the metrology assembly 206 may use an ultrasonic technology to measure gas flow. Accordingly, the monopipe adapter 202 makes possible the upgrade of mechanical gas meters to static gas meters (e.g., meters having ultrasonic metrology devices) in a more economic manner than was previously possible. In an example, the monopipe adapter 202 allows the reuse of an upper portion of the enclosure of the mechanical gas meter. The monopipe adapter 202 may also make possible a more cost-effective installation process that does not require modification to existing gas pipes and/or their location(s).

In the example of FIG. 4, the monopipe adapter 202 includes a deflector assembly 224 having a semicircular sidewall 402. The semicircular sidewall 402 may include the rib 338 shown in FIG. 3. In operation, the deflector assembly 224 directs a direction of a flow of incoming gas as it enters the gas meter. As shown, the deflector assembly 224 directs portions of the incoming gas around both sides of the kidney-shaped hollow tubular body 228 of the monopipe adapter 202. The deflector assembly 224 may be oriented to direct the gas toward a side of the enclosure that is opposite an intake port 248 of a static gas metrology assembly 206.

The tubular body includes an upstream end 404 and a downstream end 406. The upstream end 404 is connected to the metrology assembly 206 by the upstream fastener assembly 212. The tubular body is configured to have a hollow kidney shape. A side of the tubular body shown in the foreground of FIG. 4 has a larger-radius curve than a second side of the tubular body shown in the background of FIG. 4.

In the example of FIG. 4, the upstream fastener assembly 212 includes a first fastening pin 408 and a second fastening pin 410 attached to the upstream end 404 of the kidney-shaped hollow tubular body 228 by a first bracket 412 and a second bracket (obscured by the tubular body on the view of FIG. 4). In the example shown, the first fastening pin 408 and the second fastening pin 410 are configured to attach to respective first fastener 414 and second fastener 416 of a downstream end 418 of the static gas metrology assembly 206.

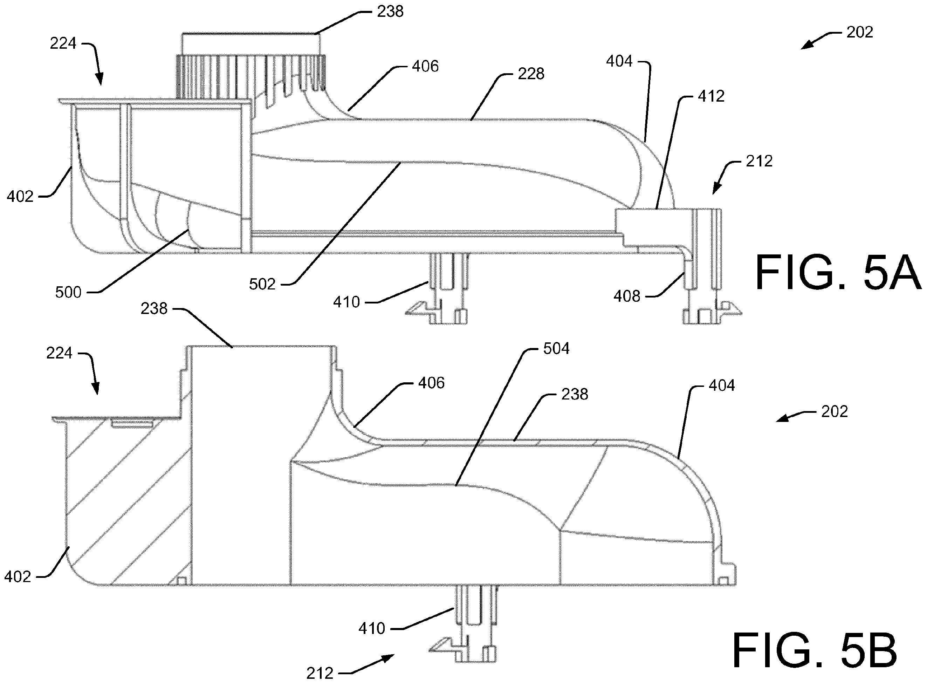

FIG. 5A shows a side view of an example monopipe adapter (e.g., monopipe adapter 202 seen in FIG. 4). The monopipe adapter 202 includes a kidney-shaped hollow tubular body 228 having an upstream end 404 and a downstream end 406. A connecting surface 238 of the monopipe adapter 202 is sized to connect to a connecting surface 236 of the monopipe connector (e.g., monopipe connector 204 seen in FIG. 2A). The connection may be made using adhesive, friction, and/or an O-ring, etc. An upstream fastener assembly 212 is configured to attach the monopipe adapter 202 to metrology device 400 (e.g., as seen in FIG. 4). The upstream fastener assembly 212 includes the fastening pins 408, 410, which engage fasteners of the metrology assembly (e.g., metrology assembly 206 best seen in FIGS. 2 and 4). The deflector assembly 224 includes the semicircular sidewall 402. In the drawing, contour lines 500 show the curvature of an outside surface of the semicircular sidewall 402. Contour line 502 shows curvature of the kidney-shaped hollow tubular body 228.

FIG. 5B shows a cutaway side view of the example monopipe adapter. Contour lines 504 show curvature of an inside service of the kidney-shaped hollow tubular body 228. The fastening pin 408, seen in the view of FIG. 5A, is not seen in FIG. 5B due to the cutaway.

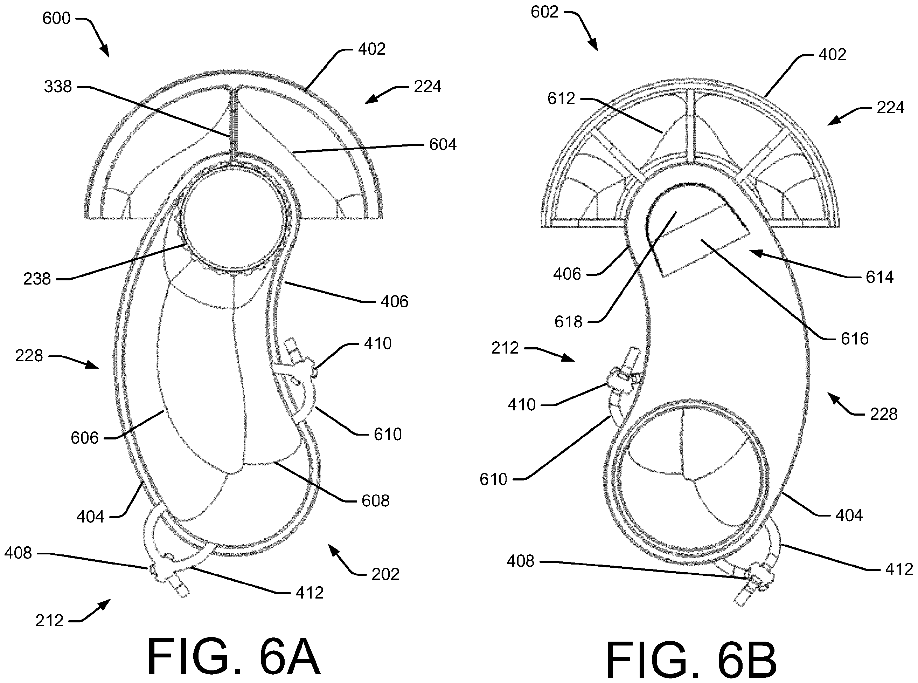

FIG. 6A shows the upper portion 600 of an example monopipe adapter (e.g., monopipe adapter 202 seen in FIG. 4), while FIG. 6B shows the lower portion 602 of the monopipe adapter. As seen in FIG. 4, the monopipe adapter 202 may be configured by connection of an upper portion 600 and the lower portion 602.

A deflector assembly 224 includes the semicircular sidewall 402 and the deflecting rib 338. Contour lines 604 show transitions between curvatures of the semicircular sidewall 402. The kidney-shaped hollow tubular body 228 includes the upstream end 404 and the downstream end 406. The downstream end 406 is closer to the connecting surface 238 of the monopipe adapter 202 in an area near a passage through which the gas exits the monopipe adapter 202. The upstream fastener assembly 212 includes the fastening pins 408, 410, supported by a first bracket 412 and second bracket 610, respectively. In the example, the kidney-shaped hollow tubular body 228 includes a number of contour lines 606, 608 that show transitions between curved surfaces.

FIG. 6B shows the lower portion 602 of the example monopipe adapter 202. The lower portion 602 of the monopipe adapter is seen (but not labeled) in FIG. 4.

Contour lines 612 are defined in the bottom surface of the deflector assembly 224. The contour lines indicate transitions between different curve gradients.

A gas redirector 614 includes a first surface 616 and a second surface 618 that redirect gas flow as it moves out of the kidney-shaped hollow tubular body 228. Accordingly, the gas redirector 614 reduces the friction of the gas flow within the kidney-shaped hollow tubular body 228 and reduces pressure drop within a gas meter using the monopipe adapter 202.

### Example Methods

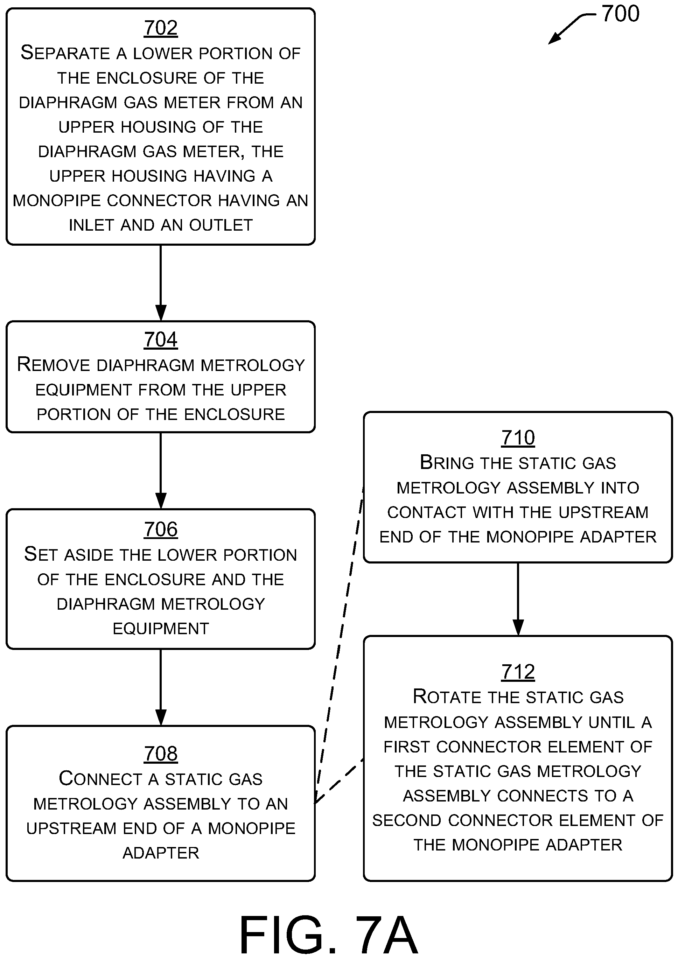

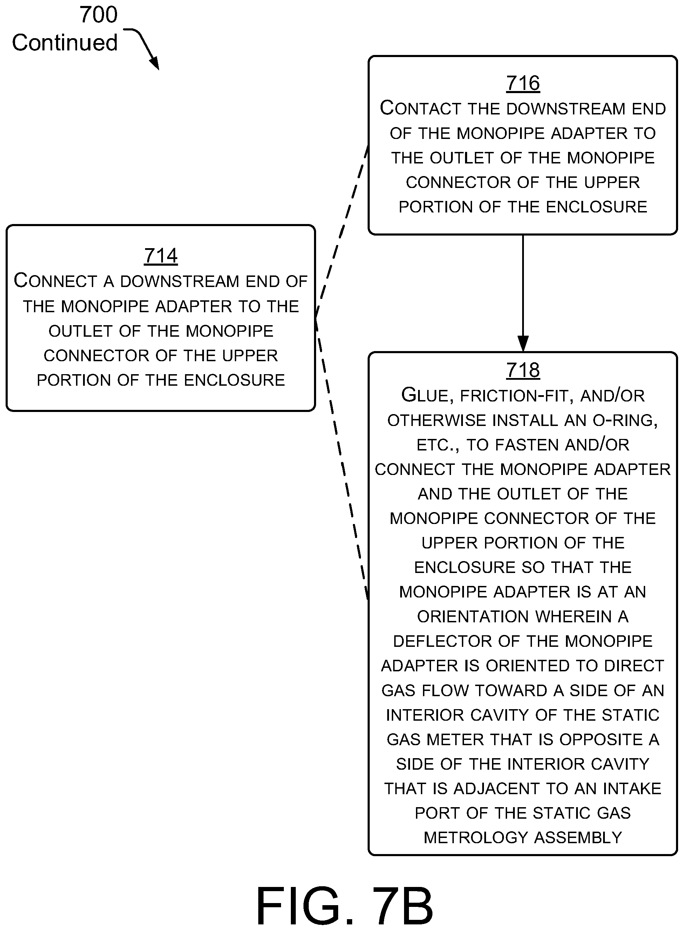

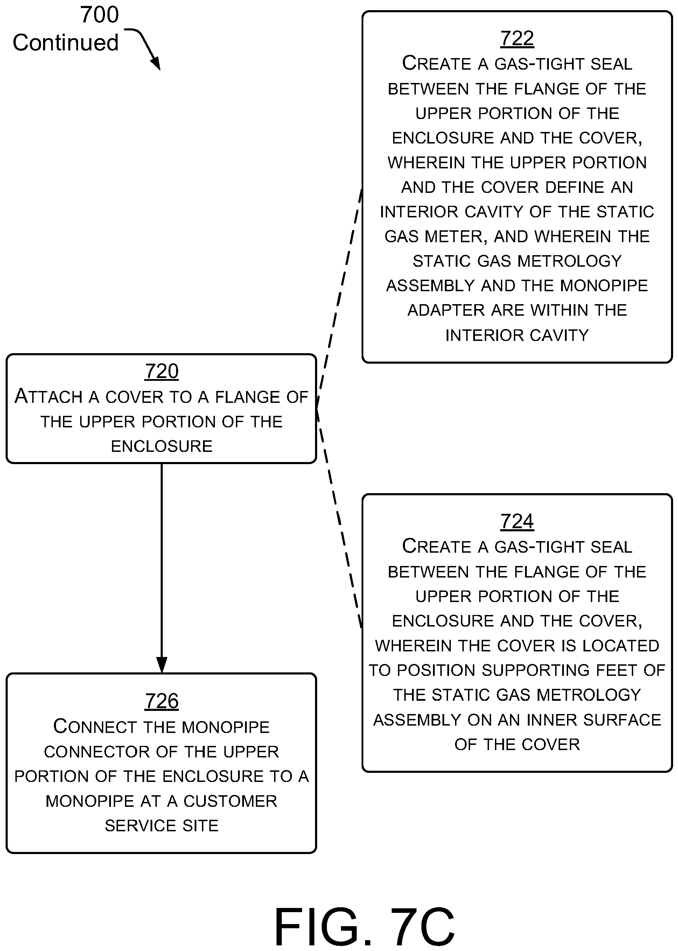

FIGs. 7A, 7B, and 7C (collectively, FIG. 7) and associated text describe a method 700 of converting a diaphragm gas meter into a static gas meter. The diaphragm gas meter represents an older technology, using moving parts, e.g., a diaphragm or bellows. The static gas meter is a newer design, and may use ultrasonic transducers and signal processing without moving parts. An example of the method 700 for converting a diaphragm gas meter into a static gas meter-that uses some components of the diaphragm gas meter-is described. In an example, a lower portion of the enclosure of the diaphragm gas meter is separated from an upper portion of the enclosure of the diaphragm gas meter. The lower portion of the enclosure contains the diaphragm, and may be discarded appropriately. The upper portion of the enclosure may be of a type having a monopipe connector. The monopipe connector is configured to connect to a monopipe, i.e., a concentric a pipe-within-a-pipe. In the monopipe, gas flows to the meter between the inner and outer pipes, and flows away from the meter in the inner pipe. The monopipe connector includes an inlet and an outlet. Components may be assembled for installation within the upper portion of the enclosure. A static gas metrology assembly is connected to an upstream end of a monopipe adapter. A downstream end of the monopipe adapter may be connected to the outlet of the monopipe connector of the upper portion of the enclosure of the original diaphragm meter. A cover or base-plate may be attached to a flange of the upper portion of the enclosure of the original diaphragm meter. Upon completion of the conversion, the metrology and signal processing of the static gas meter is contained within the upper portion of the original gas meter enclosure, and the lower portion of the original gas meter, components contained therein, along with unneeded components from the upper portion, are discarded.

At block 702, a lower portion of the enclosure of the diaphragm gas meter is separated from an upper portion of the enclosure of the diaphragm gas meter. As seen in the example of FIG. 1, the upper portion 106 of the enclosure of the diaphragm gas meter has a monopipe connector 104 having an inlet and an outlet. By separating the upper portion 106 and lower portion 110 of the enclosure of the diaphragm gas meter, the upper portion of the enclosure and its associated monopipe connector of that portion are available for repurposing.

At block 704, components of the original diaphragm gas meter within the upper portion of the enclosure may be discarded and/or recycled. The components may include diaphragm gas meter specific metrology equipment. Similarly, in the example of block 706, the lower portion of the enclosure and components contained therein, such as the diaphragm metrology equipment, are set aside.

At block 708, a static gas metrology assembly is connected to an upstream end of a monopipe adapter. Referring to the example of FIG. 2A, in the converted static gas meter 200, the monopipe adapter 202 will "bridge between" the monopipe connector 204 and to the static gas metrology assembly 206. The two components (the monopipe adapter 202 and the static gas metrology assembly 206) will reside in the upper portion 106 of the enclosure. In the example of block 710, the static gas metrology assembly 206 is brought into contact with the upstream end of the monopipe adapter 202. In the example of FIG. 4, the static gas metrology assembly 206 is brought into contact with the monopipe adapter and fastened using fastening assembly 212, including matched pins and brackets. In the example of block 712, the static gas metrology assembly is rotated until a first connector element of the static gas metrology assembly connects to a second connector element of the monopipe adapter. In the example of FIG. 4, the fastening pins 408, 410 of the monopipe adapter 202 are rotated and latched with the fasteners 414, 416, respectively. While the rotate-to-lock structure and method described above is used in one version of the connection between the static gas metrology assembly 206 and the monopipe adapter 202, this is just one possibility. Other assembly processes are envisioned. In examples, plastic welding, laser welding, ultrasonic welding, infrared welding, gluing, use of fasteners (e.g., screws, etc.), press-fit, friction-fit, threaded assembly, and other techniques could be used to achieve similar results.

At block 714, a downstream end of the monopipe adapter is connected to the outlet of the monopipe connector of the upper portion of the enclosure. In the example of FIG. 4, the connecting surface 238 of the monopipe adapter 202 is connected to the connecting surface 236 of the monopipe connector 204. The connection may be made with glue/adhesive, friction-fit, friction-fit with an O-ring, a threaded connection, etc. In the example of block 716, the downstream end of the monopipe adapter is connected to, contacted with, and/or is moved into the proximity of, the outlet of the monopipe connector of the upper portion of the enclosure. In the example of block 718, the monopipe adapter and the outlet end of the monopipe connector of the upper portion of the enclosure may be connected using any technology indicated by particular design requirements. In examples the monopipe adapter 202 and monopipe connector 204 may be attached using glue and/or adhesive, friction fit, friction fit with an O-ring, a threaded connection, and/or any other fastening technology The monopipe adapter is located such that the deflector assembly 224 directs gas flow toward a side of an interior cavity of the static gas meter that is opposite a side of the interior cavity that is adjacent to an intake port 248 of the metrology conduit 208.

At block 720, a cover is attached to a flange of the upper portion of the enclosure. In the example of FIG. 2A, the cover 216 is attached to a flange 218 of the upper portion 106, thereby forming the enclosure 214. In the example of block 722, a gas-tight seal is created between the flange of the upper portion of the enclosure and the cover. In the example, the upper portion 106 and the cover 216 define an enclosure having an interior cavity sized to locate the static gas metrology assembly and the monopipe adapter. In the similar example of block 724, a gas-tight seal is created between the flange of the upper portion of the enclosure and the cover. In the example, the cover is located to position supporting feet of the static gas metrology assembly on an inner surface of the cover.

At block 726, the monopipe connector of the upper portion of the enclosure is connected to a monopipe at a customer service site. FIG. 1 shows a monopipe 102 and monopipe connector 104 to which the monopipe adapter is connected. In the example of FIG. 2A, connecting surfaces 236, 238 attach the monopipe connector 204 to the monopipe adapter 202, using glue, friction-fit, an O-ring, threads, etc.

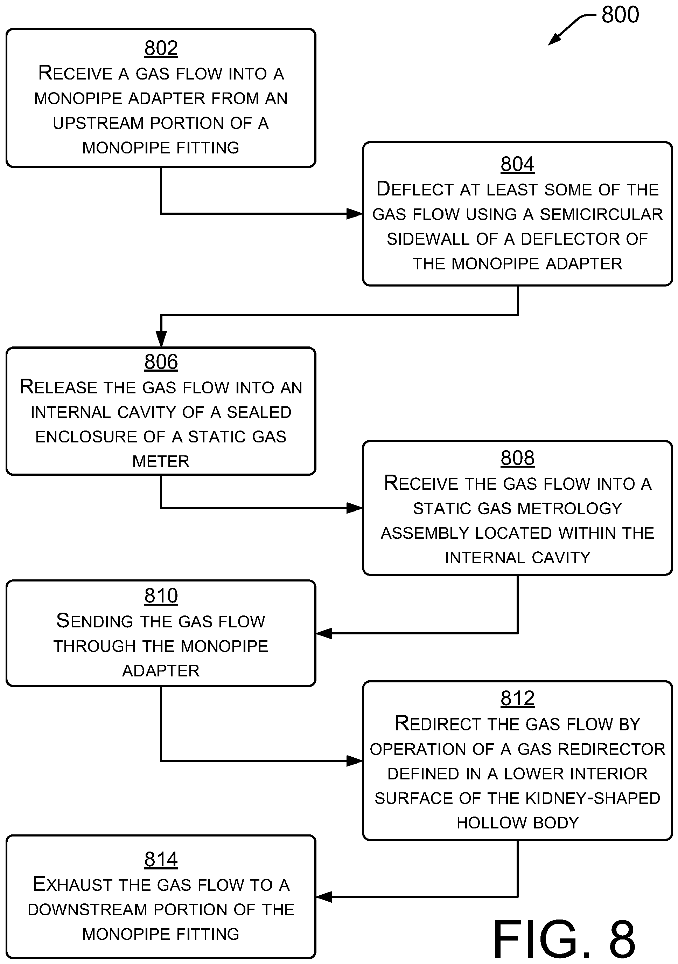

FIG. 8 shows a method 800 of operating a static gas meter. Referring to the example of FIG. 2A, gas traveling between the outer pipe of the monopipe and the inner pipe of the monopipe enters the gas meter 200 at passage 220. The gas moves into region 222 (which is partially bounded by the deflector assembly 224). The gas is then redirected by the semicircular sidewall 402 of the deflector assembly 224, causing it to move to the right 226 within the cavity of the enclosure 214. Gas moves within a cavity 246 defined by the enclosure 214 and enters an intake port 248 of a metrology conduit 208 or bypass device (if present). (In an example using a bypass device, the gas measured by the metrology assembly may be increased to account for the gas traveling through the bypass device.) Gas leaving the metrology conduit 208 passes through an upstream passage 250 of the metrology assembly 206, through the valve 252 of the valve assembly 210, and into a downstream passage 254 of the metrology assembly. Gas then moves to the left 232 within the monopipe adapter 202. Gas exits the gas meter 200 through passage 234 at the downstream end of the monopipe adapter 202, and into the inner pipe of the monopipe (not shown).

At block 802, a gas flow is received into a monopipe adapter from an upstream portion of a monopipe connector. In the example of FIG. 2A, gas moves from the region between the inner and outer pipes of the monopipe through passage 220, and into a region 222 that is partially bounded by the semicircular sidewall 402 (labeled in FIG. 4) of the deflector assembly 224.

At block 804, at least some of the gas flow is deflected using a semicircular sidewall of a deflector of the monopipe adapter. In the examples of FIGS. 2 and 4, after gas enters the region 222 it is deflected by the semicircular sidewall 402 of the deflector assembly 224.

At block 806, the gas flow is released into an internal cavity of a sealed enclosure of a static gas meter. In the examples of FIGS. 2 and 4, having been deflected, gas travels within the internal cavity 246 of the enclosure 214.

At block 808, the gas flow is received into a static gas metrology assembly located within the internal cavity. As seen in FIG. 2A, the gas enters an intake port 248 of a metrology conduit 208. As seen in FIG. 4, gas passing through the metrology conduit 208 may be measured by a metrology device 400, which may use ultrasonic techniques.

At block 810, the gas flow is sent through the monopipe adapter. In the example of FIG. 2A, the gas flows to the left 232 through the kidney-shaped hollow tubular body 228 of the monopipe adapter 202.

At block 812, the gas flow within the monopipe adapter is redirected by operation of a gas redirector defined in a lower interior surface of the kidney-shaped hollow body. As seen in FIG. 6B, the redirector 614 includes two surfaces, which redirect gas upwardly, and out of the kidney-shaped hollow tubular body 228 of the monopipe adapter 202. The redirector 614 is also seen in FIG. 3. The gas redirector smooths gas flow, reduces turbulence, and reduces pressure drop within the gas meter.

At block 814, the gas flow is exhausted to a downstream portion of the monopipe connector. As seen in FIG. 2A, gas passes through the passage 234 to exit the meter, pass through the monopipe connector 204, and into the monopipe.

### Conclusion

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A monopipe adapter (202, 302) for a static gas meter (200, 300), comprising:
a tubular body (228, 328) having an upstream end (404) and a downstream end (406),
wherein the tubular body (228, 328) comprises a hollow kidney-shaped body having a first side having a larger-radius curve than a second side;
a downstream fastener to connect the downstream end (406) of the tubular body (228, 328) to a monopipe connector (204, 304) of an enclosure (214, 314) of the static gas meter;
a deflector (224, 324) having a semicircular sidewall (402) to deflect a portion of a gas flow received from a monopipe and through the monopipe connector;
a rib (338) defined on an interior of the semicircular sidewall (402) to divide an incoming gas flow into a first gas flow and a second gas flow;
an upstream fastener (212) to connect the upstream end (404) of the tubular body (228, 328) to a static gas metrology assembly (206, 306) within the enclosure (214, 314) of the static gas meter.

2. The monopipe adapter (202) of claim 1, wherein:
the upstream fastener (212) is configured to make a rotate-to-lock connection to the static gas metrology assembly (206, 306); and
the downstream fastener is adapted for connection to an outlet of the monopipe connector (204, 304).

3. The monopipe adapter (202) of claim 1 or 2, wherein the deflector (224, 324) is oriented to deflect gas in a direction opposite an intake port (248) of a static gas metrology assembly (206).

4. The monopipe adapter (202) of any of claims 1 to 3, wherein the rib (338) is centrally located on the interior of the semicircular sidewall (402) to divide the incoming gas flow into substantially equal first and second gas flows.

5. The monopipe adapter (202) of any of claims 1 to 4, wherein the upstream fastener (212) comprises:
a first fastening pin (408) and a second fastening pin (410) attached to the upstream end (404) of the tubular body (228), wherein the first fastening pin (408) and the second fastening pin (410) are configured to attach to respective first (414) and second (416) fasteners of a downstream end (418) of the static gas metrology assembly (206).

## Patentansprüche

1. Einrohradapter (202, 302) für einen statischen Gaszähler (200, 300), umfassend:
einen rohrförmigen Körper (228, 328) mit einem stromaufwärts gelegenen Ende (404) und einem stromabwärts gelegenen Ende (406),
wobei der röhrenförmige Körper (228, 328) einen hohlen nierenförmigen Körper umfasst, der eine erste Seite mit einer Krümmung mit größerem Radius als eine zweite Seite aufweist;
ein stromabwärts gelegenes Befestigungselement, um das stromabwärts gelegene Ende (406) des rohrförmigen Körpers (228, 328) mit einem Einrohrverbinder (204, 304) eines Gehäuses (214, 314) des statischen Gaszählers zu verbinden;
einen Deflektor (224, 324) mit einer halbkreisförmigen Seitenwand (402) zum Ablenken eines Teils eines aus einem Einrohr und durch den Einrohrverbinder erhaltenen Gasstroms;
eine Rippe (338), die auf einer Innenseite der halbkreisförmigen Seitenwand (402) definiert ist, um einen ankommenden Gasstrom in einen ersten Gasstrom und einen zweiten Gasstrom zu teilen;
ein stromaufwärts gelegenes Befestigungselement (212), um das stromaufwärts gelegene Ende (404) des rohrförmigen Körpers (228, 328) mit einer statischen Gasmessanordnung (206, 306) innerhalb des Gehäuses (214, 314) des statischen Gaszählers zu verbinden.

2. Einrohradapter (202) nach Anspruch 1, wobei:
das stromaufwärts gelegene Befestigungselement (212) dazu ausgelegt ist, eine Dreh-Verschluss-Verbindung mit der statischen Gasmessanordnung (206, 306) herzustellen; und
das stromabwärts gelegene Befestigungselement dazu angepasst ist, mit einem Auslass des Einrohrverbinders (204, 304) verbunden zu werden.

3. Einrohradapter (202) nach Anspruch 1 oder 2, wobei der Deflektor (224, 324) so ausgerichtet ist, dass er Gas in eine Richtung ablenkt, die einer Einlassöffnung (248) einer statischen Gasmessanordnung (206) entgegengesetzt ist.

4. Einrohradapter (202) nach einem der Ansprüche 1 bis 3, wobei die Rippe (338) zentral auf der Innenseite der halbkreisförmigen Seitenwand (402) angeordnet ist, um den ankommenden Gasstrom in einen im Wesentlichen gleichen ersten und zweiten Gasstrom zu teilen.

5. Einrohradapter (202) nach einem der Ansprüche 1 bis 4, wobei das stromaufwärts gelegene Befestigungselement (212) umfasst:
einen ersten Befestigungsstift (408) und einen zweiten Befestigungsstift (410), die an dem stromaufwärts gelegenen Ende (404) des rohrförmigen Körpers (228) angebracht sind, wobei der erste Befestigungsstift (408) und der zweite Befestigungsstift (410) dazu ausgelegt sind, an einem betreffenden ersten (414) und zweiten (416) Befestigungselement eines stromabwärts gelegenen Endes (418) der statischen Gasmessanordnung (206) angebracht zu werden.

## Revendications

1. Adaptateur monotube (202, 302) pour compteur de gaz statique (200, 300), comprenant :
un corps tubulaire (228, 328) ayant une extrémité amont (404) et une extrémité aval (406),
le corps tubulaire (228, 328) comprenant un corps creux réniforme dont le premier côté présente une courbe de plus grand rayon que le second côté ;
un dispositif de fixation aval pour relier l'extrémité aval (406) du corps tubulaire (228, 328) à un raccord de monotube (204, 304) d'une enceinte (214, 314) du compteur de gaz statique ;
un déflecteur (224, 324) ayant une paroi latérale semi-circulaire (402) pour dévier une partie d'un flux de gaz reçu en provenance d'un monotube et à travers le raccord de monotube ;
une nervure (338) définie à l'intérieur de la paroi semi-circulaire (402) pour diviser un flux de gaz entrant en un premier flux de gaz et un second flux de gaz ;
un dispositif de fixation amont (212) pour relier l'extrémité amont (404) du corps tubulaire (228, 328) à un ensemble de métrologie de gaz statique (206, 306) à l'intérieur de l'enceinte (214, 314) du compteur de gaz statique.

2. Adaptateur monotube (202) selon la revendication 1 :
le dispositif de fixation amont (212) étant conçu pour établir une liaison rotation-blocage avec l'ensemble de métrologie de gaz statique (206, 306) ; et
le dispositif de fixation aval étant conçu pour être relié à une sortie du raccord de monotube (204, 304).

3. Adaptateur monotube (202) selon la revendication 1 ou 2, le déflecteur (224, 324) étant orienté de sorte à dévier le gaz dans une direction opposée à un orifice d'admission (248) d'un ensemble de métrologie de gaz statique (206).

4. Adaptateur monotube (202) selon l'une quelconque des revendications 1 à 3, la nervure (338) étant située centralement à l'intérieur de la paroi latérale semi-circulaire (402) pour diviser le flux de gaz entrant en des premier et second flux de gaz sensiblement égaux.

5. Adaptateur monotube (202) selon l'une quelconque des revendications 1 à 4, le dispositif de fixation amont (212) comprenant :
une première goupille de fixation (408) et une seconde goupille de fixation (410) fixées à l'extrémité amont (404) du corps tubulaire (228), la première goupille de fixation (408) et la seconde goupille de fixation (410) étant conçues pour se fixer aux premier (414) et second (416) dispositifs de fixation respectifs d'une extrémité aval (418) de l'ensemble de métrologie de gaz statique (206) .
